# EUROPEAN PATENT APPLICATION

(11) **EP 4 435 054 A1**
(43) Date of publication of application: **25.09.2024**
(21) Application number: 22895518.3
(22) Date of filing: 10.11.2022
(51) Int. Cl.: C08L 75/04, B32B 5/18, B32B 27/40, C08G 18/00, C08G 18/48, C08J 9/04, C08K 5/09, C08L 71/02, C08L 75/08

(54) **URETHANE RESIN COMPOSITION AND LAMINATE**

(30) Priority: 18.11.2021 JP 2021187750
(71) Applicant: DIC Corporation, Tokyo 174-8520 (JP)
(72) Inventor: FUJISHITA, Norie, Takaishi-shi, Osaka 592-0001 (JP); MAEDA, Ryo, Takaishi-shi, Osaka 592-0001 (JP); TETSUI, Tomohiro, Takaishi-shi, Osaka 592-0001 (JP)
(74) Representative: Kraus & Lederer PartGmbB
(86) International application number: PCT/JP2022/041827
(87) International publication number: WO 2023/090236

(57) **Abstract**

The present invention provides a urethane resin composition containing a urethane resin (A) having a nonionic group, water (B), and a film-forming aid (C) being a polyethylene glycol (c1) and/or a polyethylene glycol (c2) having an alkoxy group having 11 or less carbon atoms. The present invention also provides a laminate having at least a substrate (i) and a foaming layer (ii) formed of the urethane resin composition. This urethane resin composition can form a coating film having excellent crack resistance, texture, peel strength, and flexibility at low temperature.

## Description

### Technical Field

The present invention relates to a urethane resin composition containing water.

### Background Art

A urethane resin is widely used in production of synthetic leathers (including artificial leathers) since the urethane resin has high mechanical strength and a favorable texture. The mainstream of this application has been a solvent-based urethane resin containing N,N-dimethylformamide (DMF) so far. However, from backgrounds of DMF regulation in EU, enhancement of VOC emission regulation in China and Taiwan, DMF regulations by major apparel makers, and the like, there is a need for elimination of DMF from a urethane resin composition for layers constituting a synthetic leather.

In such a situation, a urethane dispersion (PUD) in which a urethane resin is dispersed in water begins to be studied as an alternative material for a conventional intermediate porous layer formed by wet coagulation of a solvent-based urethane resin. In order to impart the same texture and the like as those of a wet film-formed product, a foam of PUD is variously studied as the alternative.

As a method for obtaining the foam of PUD, for example, mechanical foaming of blending a microcapsule or dispersing gas such as carbon dioxide in a PUD-blended liquid, and the like are studied (for example, see PTL 1). However, a method for blending a microcapsule causes a problem such as a poor texture of an obtained foam and poor smoothness due to expansion of the microcapsule. A method for dispersing gas is difficult to control the size of the foam and the like and stably produce a synthetic leather having a favorable texture because of elimination or the like of gas bubbles mixed in a blended liquid during production of the foam.

From the backgrounds, as a recent method for simply obtaining a foam, a mechanical foaming procedure in which PUD is stirred and whipped with a machine is studied. However, the mechanical foaming procedure has problems in which expression of physical properties, such as texture, peel strength, and low-temperature bending resistance, is not stable because of cracking of a urethane coating film during drying of water in PUD.

### Citation List

### Patent Literature

PTL 1: Japanese Unexamined Patent Application Publication No. 2007-191810

### Summary of Invention

### Technical Problem

An object of the present invention is to provide a urethane resin composition containing water that can form a coating film having excellent crack resistance, texture, peel strength, and flexibility at low temperature even under mechanical foaming.

### Solution to Problem

The present invention provides a urethane resin composition containing a urethane resin (A) having a nonionic group, water (B), and a film-forming aid (C) being a polyethylene glycol (c1) and/or a polyethylene glycol (c2) having an alkoxy group having 11 or less carbon atoms. The present invention provides a laminate having at least a substrate (i) and a foaming layer (ii) formed of the urethane resin composition.

### Advantageous Effects of Invention

The urethane resin composition of the present invention contains water, and is environment-friendly. The urethane resin composition of the present invention can form a coating film having excellent crack resistance, texture, peel strength, and low-temperature flexibility even under mechanical foaming. Therefore, the urethane resin composition of the present invention can be suitably used as a material for a synthetic leather, and particularly suitably used as a foaming layer of a synthetic leather. Description of Embodiments

A urethane resin composition of the present invention contains a urethane resin (A) having a nonionic group, water (B), and a specific film-forming aid (C).

In the present invention, the specific film-forming aid (C) is necessarily contained. By using the specific film-forming aid (C), the volatilization rate of water during drying of water in the urethane resin composition can be made mild and uniform. This assumes that cracking of the coating film can be prevented, and a coating film having excellent texture, peel strength, and the like is obtained.

As the film-forming aid (C), it is necessary to use a polyethylene glycol (c1) and/or a polyethylene glycol (c2) having an alkoxy group having 11 or less carbon atoms.

The number of carbon atoms of the alkoxy group in the polyethylene glycol (c2) is preferably in the range of one to five, more preferably one to three, still more preferably one to two, and particularly preferably one (a methoxy group) since more excellent crack resistance is achieved. The number of the alkoxy group in one molecule of the polyethylene glycol (c2) is in the range of one to two and preferably one.

The polyethylene glycol (c1) and the polyethylene glycol (c2) preferably have a weight-average molecular weight in the range of 100 to 4,000, more preferably 100 to 3,000, and still more preferably 400 to 2,000 to achieve more excellent crack resistance. The weight-average molecular weight of the polyethylene glycol (c1) and the polyethylene glycol (c2) denotes a value determined by gel permeation chromatography (GPC).

The amount of the film-forming aid (C) used is preferably in the range of 0.05 to 50 parts by mass, and preferably 0.1 to 20 parts by mass, relative to 100 parts by mass of the urethane resin (A) (= solid content) described below.

The urethane resin (A) has a nonionic group, can be dispersed in water, and does not require a cross-linking agent, and therefore the urethane resin (A) can achieve excellent low-temperature flexibility.

Examples of a method for obtaining the urethane resin having a nonionic group include a method using a compound having an oxyethylene structure as a raw material.

As the compound having an oxyethylene structure, for example, polyethylene glycol, polyoxyethylene polyoxypropylene glycol, polyoxyethylene polyoxytetramethylene glycol, or a polyether polyol having an oxyethylene structure, such as polyethylene glycol dimethyl ether, can be used. The compounds may be used alone, or two or more types thereof may be used in combination. Among these, polyethylene glycol and/or polyethylene glycol dimethyl ether are preferably used since hydrophilicity can be more simply controlled.

The number-average molecular weight of the compound having an oxyethylene structure is preferably in the range of 200 to 10,000, more preferably 300 to 3,000, still more preferably 300 to 2,000, and particularly preferably 300 to 1,000 since more excellent emulsifying property and water dispersion stability are achieved. The number-average molecular weight of the compound having an oxyethylene structure denotes a value determined by gel permeation chromatography (GPC).

For the urethane resin (A), specifically, a chain-elongating agent (a1), a polyol (a2), a polyisocyanate (a3), and a reactant of the compound having an oxyethylene structure can be used.

As the chain-elongating agent (a1), a compound having a molecular weight of less than 500 (preferably in the range of 50 to 450) can be used, and specifically a chain-elongating agent having a hydroxy group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain-elongating agent having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine, or the like can be used. The chain-elongating agents may be used alone, or two or more types thereof may be used in combination. The molecular weight of the chain-elongating agent (a1) denotes a value determined from a chemical formula.

As the chain-elongating agent (a1), the chain-elongating agent having an amino group (hereinafter abbreviated as "amine-based chain-elongating agent") is preferably used. This is because a chain can be easily elongated even at a lower temperature of 30°C or lower and energy consumption in a reaction can be reduced, more excellent mechanical strength, film-forming property, foam retention, texture, low-temperature flexibility, and peel strength due to the introduction of a urea group are achieved, and the solid content of the urethane resin (A) is more easily increased. An amine-based chain-elongating agent having a molecular weight of 30 to 250 is more preferably used since more excellent foam retention, emulsifying property, low-temperature flexibility, texture, and water dispersion stability are achieved. When two or more types of the chain-elongating agents are used in combination, the molecular weight represents the average value thereof, and the average value need only be included in the preferable range of the molecular weight.

The proportion of the chain-elongating agent (a1) used in the total mass of the raw materials constituting the urethane resin (X) is preferably in the range of 0.1 to 30% by mass, and particularly preferably 0.5 to 10% by mass since more excellent mechanical strength, film-forming property, texture, peel strength, foam retention, emulsifying property, low-temperature flexibility, and water dispersion stability are achieved and the solid content of the urethane resin (A) is more easily increased.

As the polyol (a2), for example, a polyether polyol, a polyester polyol, a polyacrylic polyol, a polycarbonate polyol, a polybutadiene polyol, or the like can be used. The polyols may be used alone, or two or more types thereof may be used in combination. As the polyol (a2), the polyols except the compound having an oxyethylene structure that imparts the nonionic group is used.

From the viewpoint of the mechanical strength of the coating film obtained, the number-average molecular weight of the polyol (a2) is preferably in the range of 500 to 100,000, and more preferably 800 to 10,000. The number-average molecular weight of the polyol (a2) denotes a value determined by gel permeation chromatography (GPC).

The proportion of the polyol (a2) used in the total mass of the raw materials constituting the urethane resin (A) is preferably in the range of 40 to 90% by mass, and particularly preferably 50 to 80% by mass since more excellent mechanical strength is achieved.

As the polyisocyanate (a3), for example, an aromatic polyisocyanate, such as phenylene diisocyanate, toluene diisocyanate, diphenylmethane diisocyanate, xylylene diisocyanate, naphthalene diisocyanate, polymethylenepolyphenyl polyisocyanate, or carbodiimidized diphenylmethane diisocyanate; an aliphatic polyisocyanate or an alicyclic polyisocyanate, such as hexamethylene diisocyanate, lysine diisocyanate, cyclohexane diisocyanate, isophorone diisocyanate, dicyclohexylmethane diisocyanate, xylylene diisocyanate, tetramethylxylene diisocyanate, dimer acid isocyanate, or norbornene diisocyanate, or the like can be used. The polyisocyanates may be used alone, or two or more types thereof may be used in combination.

The proportion of the polyisocyanate (a3) used in the total mass of the raw materials constituting the urethane resin (A) is preferably in the range of 5 to 40% by mass, and particularly preferably 10 to 35% by mass since more excellent mechanical strength is achieved.

The proportion of the compound having an oxyethylene structure used in the total mass of the raw materials constituting the urethane resin (A) is preferably 5% by mass or less, more preferably 3% by mass or less, and still more preferably in the range of 0.25 to 3% by mass since more excellent mechanical strength, emulsifying property, water dispersion stability, low-temperature flexibility, and film-forming property are achieved.

The average particle diameter of the urethane resin (A) is preferably in the range of 0.01 to 1 µm, and more preferably 0.05 to 0.9 □m since more excellent foam retention, surface smoothness, texture, low-temperature flexibility, and film-forming property are achieved. A method for measuring the average particle diameter of the urethane resin (A) will be described in Examples below.

The content of the urethane resin (A) in the urethane resin composition of the present invention is preferably 50 to 80% by mass, more preferably 50 to 70% by mass. Since the so-called solid content of the urethane resin (A) in the water dispersion is high, the retention is more excellent even under foaming by mechanical foaming, and the drying property of the urethane resin composition is enhanced. Therefore, the urethane resin composition is more excellent in crack resistance during and/or after drying, and can achieve excellent texture and low-temperature flexibility.

As water (B) used in the present invention, ion exchanged water, distilled water, or the like can be used. These types of water may be used alone, or two or more types thereof may be used in combination.

Next, a method for producing the urethane resin (A) used in the present invention will be described.

The method for producing the urethane resin (A) used in the present invention includes a step of reacting the polyol (a2), the polyisocyanate (a3), and the compound having an oxyethylene structure in the absence of a solvent to obtain a urethane prepolymer (i) having an isocyanate group (hereinafter abbreviated as "prepolymer step"), a step of dispersing the urethane prepolymer (i) in the water (hereinafter abbreviated as "emulsification step"), and then a step of reacting the chain-elongating agent (a1) to obtain the urethane resin (A) (hereinafter abbreviated as "chain-elongation step").

The prepolymer step is preferably performed in the absence of a solvent. In conventional technologies, the prepolymer step is generally performed in an organic solvent such as methyl ethyl ketone or acetone, but a step of distilling off the organic solvent after the emulsification step is required, and takes several days for production in a production site. In the solvent distillation step, complete distillation of the organic solvent is difficult, and a slight amount of the organic solvent often remains. It has been almost impossible to perform the solvent distillation step completely in an environment-friendly manner. On the other hand, by producing the prepolymer in the absence of a solvent, a urethane resin that is completely free of an organic solvent is obtained, and a step of producing the urethane resin can achieve labor savings.

In the prepolymer step, the molar ratio of the isocyanate group of the polyisocyanate (a3) to a total of the hydroxy group of the polyol (a2) and the hydroxy group and amino group of the compound having an oxyethylene structure (isocyanate group/(hydroxy group + amino group)) is preferably in the range of 1.1 to 3, and more preferably 1.2 to 2 because more excellent foam retention, low-temperature flexibility, crack resistance, surface smoothness, film-forming property, texture, peel strength, and mechanical strength are achieved.

In the prepolymer step, the reaction is performed, for example, at 50 to 120°C for 1 to 10 hours.

The emulsification step can be performed, for example, using a reactor equipped with a stirrer blade; a kneading machine such as a kneader, a continuous kneader, a taper-roll, a single-screw extruder, a twin-screw extruder, a triple-screw extruder, a versatile mixer, Plastomill, or a votator-type kneader; a rotary dispersion mixer such as a homomixer, a static mixer, Filmix, Ebara milder, Clear mix, Ultra Turrax, Cavitron, or Biomixer; a ultrasonic disperser; a machine having no movable portion and capable of mixing by a flow of a fluid itself, such as an in-line mixer, or the like.

The emulsification step is preferably performed at a temperature at which water is not evaporated, for example, at a temperature of 10 to 90°C. The emulsification step can be performed using the same equipment as those in the prepolymer step.

The chain-elongation step is a step of increasing the molecular weight of the urethane prepolymer (i) by a reaction between the isocyanate group of the urethane prepolymer (i) and the chain-elongating agent (a1), to obtain the urethane resin (A). From the viewpoint of productivity, the chain-elongation step is preferably performed at a temperature of 50°C or lower.

In the chain-elongation step, the molar ratio of a total of the hydroxy group and amino group of the chain-elongating agent (a1) to the isocyanate group of the urethane prepolymer (i) ((hydroxy group + amino group)/isocyanate group) is preferably in the range of 0.8 to 1.1, and more preferably 0.9 to 1 since more excellent low-temperature flexibility, crack resistance, film-forming property, and mechanical strength are achieved.

The chain-elongation step can be performed using the same equipment as those in the prepolymer step.

Although the urethane resin composition of the present invention contains as essential components the urethane resin (A), water (B), and the film-forming aid (C), an optional additive other than these may be contained as necessary.

As the optional additive, for example, a surfactant, a cross-linking agent, an emulsifier, a neutralizer, a thickener, a urethane-forming catalyst, a filler, a pigment, a dye, a flame retarder, a leveling agent, an antiblocking agent, or the like can be used. The additives may be used alone, or two or more types thereof may be used in combination. In production of the urethane resin (A), it is preferable that an organic solvent be not substantially contained, but the organic solvent may be added as the additive.

As the surfactant, a surfactant (D) having a hydrophobic moiety having 10 or more carbon atoms is preferably used since the surfactant prevents disappearance of bubbles produced by mechanical foaming and achieves very excellent crack resistance and texture.

As the surfactant (D), for example, a surfactant represented by the following formula (2); a fatty acid salt, a succinate salt, a sulfosuccinate salt, an octadecylsulfosuccinate salt, a sulfosuccinate ester, or the like can be used. The surfactants may be used alone, or two or more types thereof may be used in combination.
[Formula 1]

**RCO₂⁻X⁺** **(2)**

In the formula (2), R represents a linear or branched alkyl group having 10 to 20 carbon atoms, and X represents Na, K, NH₄, morpholine, ethanolamine, or triethanolamine.

Among the aforementioned compounds, the surfactant (D) used is preferably the surfactant represented by the formula (2), more preferably the surfactant represented by the formula (2) in which R represents a linear alkyl group having 13 to 19 carbon atoms, and particularly preferably a stearate salt since more excellent foam retention is achieved.

When the surfactant (D) is used, the amount of the surfactant (D) used is preferably in the range of 0.01 to 30 parts by mass, and more preferably 0.1 to 20 parts by mass, relative to 100 by mass of the urethane resin (A) (= solid content) since more excellent foam retention is achieved.

Next, a laminate of the present invention will be described.

The laminate has at least a substrate (i) and a foaming layer (ii) formed of the urethane resin composition.

As the substrate (i), for example, a fiber substrate such as a nonwoven fabric, a woven fabric, or a knit fabric formed from polyester fibers, polyethylene fibers, nylon fibers, acrylic fibers, polyurethane fibers, acetate fibers, rayon fibers, polylactate fibers, cotton, hemp, silk, wool, glass fibers, carbon fibers, or blended fibers thereof; the nonwoven fabric impregnated with a resin such as a polyurethane resin; the nonwoven fabric further having a porous layer; a resin substrate such as a thermoplastic urethane (TPU), or the like can be used.

Next, a method for producing the laminate of the present invention will be described.

Examples of the method for producing the laminate include:
(X) a method in which the urethane resin composition is foamed, to obtain a foaming liquid, the foaming liquid is applied to a release paper and dried, and the release paper is bonded to the substrate (i);
(Y) a method in which the urethane resin composition is foamed, to obtain a foaming liquid, the foaming liquid is applied to a surface layer produced on a release paper and dried, and the surface layer is bonded to the substrate (i); and
(Z) a method in which the urethane resin composition is foamed, to obtain a foaming liquid, the foaming liquid is applied to the substrate (i), and dried, and if necessary, the substrate (i) is bonded to a surface layer (iii) produced on a release paper.

Examples of a method for foaming the urethane resin composition to obtain a foaming liquid include stirring with the hand, and mechanical foaming using a mixer such as a mechanical mixer. In particular, the method using a mixer is preferred since the foaming liquid is easily obtained. When the mixer is used, for example, the method includes stirring at 500 to 3,000 rpm for 10 seconds to 10 minutes. In this case, the volume after foaming is preferably 1.3 to 7 times, and more preferably 1.2 to 2 times the volume prior to foaming since the foaming layer (ii) having a favorable texture is obtained.

Examples of a method for applying the obtained foaming liquid to the substrate (i) or the like include methods using a roll coater, a knife coater, a comma coater, an applicator, and the like.

Examples of a method for drying the applied substance include a drying method at a temperature of 60 to 130°C for 30 seconds to 10 minutes.

The thickness of the foaming layer (ii) obtained by the aforementioned method is, for example, 5 to 300 µm.

The density of the foaming layer (ii) is preferably in the range of 200 to 1,000 kg/m³, and more preferably 400 to 800 kg/m³ since a more excellent texture is achieved. The density of the foaming layer (ii) denotes a value obtained by subtracting the weight of the substrate (i) per area of a square with sides of 10 cm from the weight of the laminate per area of a square with sides of 10 cm and dividing the resultant value by the thickness of the foaming layer (ii).

The surface layer (iii) can be formed by a publicly known method using a publicly known material, for example, a solvent-based urethane resin, an aqueous urethane resin, a silicone resin, a polypropylene resin, or a polyester resin. When importance is placed on a flexible texture, heat resistance, and hydrolysis resistance, a polycarbonate-based urethane resin is preferably used. For a reduction in DMF in an environment-friendly manner, an aqueous polycarbonate-based urethane resin is more preferably used.

On the surface layer (iii), if necessary, a surface treatment layer (iv) may be further provided for an enhancement in scratch resistance, impartation of gloss, and the like. The surface treatment layer (iv) can be formed by a publicly known method using a publicly known material.

The urethane resin composition of the present invention contains water, and is environment-friendly. The urethane resin composition of the present invention can form a coating film having excellent crack resistance, texture, peel strength, and low-temperature flexibility even under mechanical foaming. Therefore, the urethane resin composition of the present invention can be suitably used as a material for a synthetic leather, and particularly suitably used as a foaming layer of a synthetic leather. Examples

Hereinafter, the present invention will be described in detail using Examples.

### [Synthesis Example 1] Preparation of urethane resin (A-1) composition

In the presence of 0.1 parts by mass of tin(II) octylate, 1,000 parts by mass of polyether polyol ("PTMG2000" available from Mitsubishi Chemical Corporation, number-average molecular weight: 2,000), 38 parts by mass of polyethylene glycol ("PEG600" available from NOF CORPORATION, number-average molecular weight: 600), and 262 parts by mass of dicyclohexylmethane diisocyanate (HMDI) were reacted at 100°C until the NCO percent reached 2.8%, to obtain a urethane prepolymer.

The urethane prepolymer heated to 70°C, 65 parts by mass of aqueous 20% sodium dodecylbenzenesulfonate solution ("NEOGEN S-20F" available from DKS Co., Ltd.) as an emulsifier, and 948 parts by mass of water were stirred and mixed with a homomixer, to obtain an emulsion liquid. Subsequently, a water-diluted solution of isophoronediamine (IPDA) having an amino group content equal to the molar amount of the NCO group was immediately added, resulting in chain elongation. Finally, a urethane resin (A-1) composition in which the content of the urethane resin (A-1) was 58% by mass was obtained.

### [Synthesis Example 2] Preparation of urethane resin (A-2) composition

In the presence of 0.1 parts by mass of tin(II) octylate, 1,000 parts by mass of polycarbonate polyol (formed from 1,6-hexanediol as a raw material, number-average molecular weight: 2,000), 18 parts by mass of PEG600, and 262 parts by mass of HMDI were reacted at 100°C until the NCO percent reached 3.1%, to obtain a urethane prepolymer.

The urethane prepolymer heated to 70°C, 64 parts by mass of aqueous 20% sodium dodecylbenzenesulfonate solution ("NEOGEN S-20F" available from DKS Co., Ltd.) as an emulsifier, and 811 parts by mass of water were stirred and mixed with a homomixer, to obtain an emulsion liquid. Subsequently, a water-diluted solution of IPDA having an amino group content corresponding to 95% of the molar amount of the NCO group was immediately added, resulting in chain elongation. Finally, a urethane resin (A-2) composition in which the content of the urethane resin (A-2) was 60% by mass was obtained.

### [Example 1]

100 g of the urethane resin (A-1) composition obtained in Synthesis Example 1, 2.0 g of thickener "Borch Gel ALA" (available from Borchers), 2.0 g of ammonium stearate, and 5.0 g of methoxy polyethylene glycol ("UNIOX M-550" available from NOF CORPORATION, hereinafter abbreviated as "MPEG") were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Example 2]

100 g of the urethane resin (A-1) composition obtained in Synthesis Example 1, 2.0 g of thickener "Borch Gel ALA" (available from Borchers), 2.0 g of ammonium stearate, and 5.0 g of polyethylene glycol ("PEG #400" available from NOF CORPORATION, number-average molecular weight; 400, hereinafter abbreviated as "PEG") were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 um, and this laminate was bonded to a nonwoven fabric, to obtain a synthetic leather.

### [Example 3]

100 g of the urethane resin (A-2) composition obtained in Synthesis Example 2, 2.0 g of thickener "Borch Gel ALA" (available from Borchers), 2.0 g of ammonium stearate, and 5.0 g of MPEG were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 µm, and this laminate was bonded to a nonwoven fabric, to obtain a synthetic leather.

### [Comparative Example 1]

100 g of aqueous anionic urethane resin ("HYDRAN WLS-120AR" available from DIC Corporation), 2.0 g of thickener "Borch Gel ALA" (available from Borchers), 2.0 g of ammonium stearate, 5.0 g of MPEG, and 4.0 g of cross-linking agent ("CARBODILITE SV-02" available from Nisshinbo Chemical Inc.) were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 µm, and this laminate was bonded to a nonwoven fabric, to obtain a synthetic leather.

### [Comparative Example 2]

100 g of aqueous anionic urethane resin ("HYDRAN WLS-120AR" available from DIC Corporation), 2.0 g of thickener "Borch Gel ALA" (available from Borchers), 2.0 g of ammonium stearate, 5.0 g of PEG, and 4.0 g of cross-linking agent ("CARBODILITE SV-02" available from Nisshinbo Chemical Inc.) were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 µm, and this laminate was bonded to a nonwoven fabric, to obtain a synthetic leather.

### [Comparative Example 3]

100 g of the urethane resin (A-1) composition obtained in Synthesis Example 1, 2.0 g of thickener "Borch Gel ALA" (available from Borchers), and 3.0 g of ammonium stearate were stirred at 2,000 rpm with a mechanical mixer, to blow air, and thus a blended liquid having a volume corresponding to 150% of the initial volume was obtained.

This blended liquid was applied to a release paper, and dried at 80°C for 3 minutes, to obtain a urethane foaming layer having a thickness of 300 µm, and this laminate was bonded to a nonwoven fabric, to obtain a synthetic leather.

### [Method for Measuring Number-Average Molecular Weight and the like]

The number-average molecular weights of the polyols, the film-forming aids, and the like used in Synthesis Examples and Comparative Synthesis Examples denote a value determined by measuring under the following conditions by gel permeation chromatography (GPC).

Measuring apparatus: high-speed GPC device ("HLC-8220GPC" manufactured by TOSOH CORPORATION)
Column: the following columns manufactured by TOSOH CORPORATION were connected in series for use.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: tetrahydrofuran (THF)
Flow rate: 1.0 mL/min
Injection volume: 100 µL (tetrahydrofuran solution in which the sample concentration was 0.4% by mass)
Standard sample: a standard curve was created using each of the following standard polystyrenes

### (Standard polystyrene)

"TSKgel standard polystyrene A-500" available from TOSOH CORPORATION
"TSKgel standard polystyrene A-1000" available from TOSOH CORPORATION
"TSKgel standard polystyrene A-2500" available from TOSOH CORPORATION
"TSKgel standard polystyrene A-5000" available from TOSOH CORPORATION
"TSKgel standard polystyrene F-1" available from TOSOH CORPORATION
"TSKgel standard polystyrene F-2" available from TOSOH CORPORATION
"TSKgel standard polystyrene F-4" available from TOSOH CORPORATION
"TSKgel standard polystyrene F-10" available from TOSOH CORPORATION
"TSKgel standard polystyrene F-20" available from TOSOH CORPORATION
"TSKgel standard polystyrene F-40" available from TOSOH CORPORATION
"TSKgel standard polystyrene F-80" available from TOSOH CORPORATION
"TSKgel standard polystyrene F-128" available from TOSOH CORPORATION
"TSKgel standard polystyrene F-288" available from TOSOH CORPORATION
"TSKgel standard polystyrene F-550" available from TOSOH CORPORATION

### [Method for Measuring Average Particle Diameter of Urethane Resin (A)]

For the urethane resin compositions obtained in Examples and Comparative Examples, the average particle diameter on an area basis was measured with a laser diffraction/scattering particle size distribution measuring device ("LA-910" manufactured by Horiba, Ltd.) at a relative refractive index of 1.10 using water as a dispersion liquid.

### [Method for Evaluating Crack Resistance]

The appearances of the synthetic leathers obtained in Examples and Comparative Examples were observed, and the presence or absence of crack was confirmed. The synthetic leather in which cracks did not appear was determined as "Good", and the synthetic leather in which a crack appeared was determined as "Poor".

### [Method for Evaluating Texture]

The synthetic leathers obtained in Examples and Comparative Examples were touched with the hand, and evaluated as follows.
"Good": The synthetic leather is soft and elastic.
"Poor": The synthetic leather has low softness and is hard.

### [Method for Evaluating Peel Strength]

Hot melt tape 2.5 cm wide ("BW-2" available from San Chemicals, Ltd.) was placed on the urethane foam layer of the synthetic leathers obtained in Examples and Comparative Examples and heated at 150°C for 30 seconds to cause the hot melt tape to adhere. The sample was cut along the width of the hot melt tape. A portion of this sample was peeled off, the substrate and the hot melt tape were held by chucks, and the peel strength was measured with Autograph (available from Shimadzu Corporation) and evaluated as follows. The average value of the obtained data was determined and converted to 1 cm width.
"Good": 3 kgf/cm or more
"Poor": less than 3 kgf/cm

### [Method for Measuring Low-Temperature Flexibility]

The synthetic leathers obtained in Examples and Comparative Examples were subjected to a flexibility test (-35°C, 100 times/min) with a flexo-meter ("Flexo-meter with a low temperature oven" manufactured by YASUDA SEIKI SEISAKUSHO, LTD.), and the number of flexing until the surface of each of the synthetic leathers was cracked was measured, and evaluated as follows.
"Good": 10,000 or more
"Poor": less than 10,000

**[Table 1]**

| Table 1 | Ex. 1 | Ex. 2 | Ex. 3 | Comp. Ex. 1 | Comp. Ex. 2 | Comp. Ex. 3 |
|---|---|---|---|---|---|---|
| Urethane resin (A) | (A-1) | (A-1) | (A-2) | Urethane resin having anionic group | Urethane resin having anionic group | (A-1) |
| Film-forming aid (C) | MPEG | PEG | MPEG | MPEG | PEG | |
| Surfactant (D) | Ammonium stearate | Ammonium stearate | Ammonium stearate | Ammonium stearate | Ammonium stearate | Ammonium stearate |
| Evaluation of crack resistance | Good | Good | Good | Good | Good | Poor |
| Evaluation of texture | Good | Good | Good | Good | Good | Poor |
| Evaluation of peel strength | Good | Good | Good | Good | Good | Poor |
| Evaluation of low-temperature flexibility | Good | Good | Good | Poor | Poor | Poor |

In Examples 1 to 3 using the urethane resin composition of the present invention, it was found that a synthetic leather having excellent crack resistance, texture, peel strength, and low-temperature flexibility was obtained.

On the other hand, Comparative Examples 1 and 2 are aspects in which a urethane resin having an anionic group was used in place of the urethane resin (A) having a nonionic group, and the low-temperature flexibility was poor.

Comparative Example 3 is an aspect in which the film-forming aid (C) was not used, and all of the crack resistance, the texture, the peel strength, and the low-temperature flexibility were poor.

## Claims

1. A urethane resin composition comprising:
a urethane resin (A) having a nonionic group;
water (B); and
a film-forming aid (C) being a polyethylene glycol (c1) and/or a polyethylene glycol (c2) having an alkoxy group having 11 or less carbon atoms.

2. The urethane resin composition according to claim 1, wherein the polyethylene glycol (c1) and the polyethylene glycol (c2) have a weight-average molecular weight in a range of 100 to 4,000.

3. The urethane resin composition according to claim 1 or 2, wherein the nonionic group of the urethane resin (A) is formed of a compound having an oxyethylene structure.

4. The urethane resin composition according to any one of claims 1 to 3, further comprising a surfactant (D) having a hydrophobic moiety having 10 or more carbon atoms.

5. The urethane resin composition according to claim 4, wherein the surfactant (D) is a stearate salt.

6. A laminate comprising at least a substrate (i) and a foaming layer (ii) formed of the urethane resin composition according to any one of claims 1 to 5.

7. The laminate according to claim 6, wherein the foaming layer (ii) is formed by mechanical foaming of the urethane resin composition.
